# EUROPÄISCHE PATENTSCHRIFT

(11) **EP 3 788 448 B1**
(45) Veröffentlichungstag und Bekanntmachung des Hinweises auf die Patenterteilung: **04.09.2024**
(21) Anmeldenummer: 19717468.3
(22) Anmeldetag: 09.04.2019
(51) Int. Cl.: G05B 19/042, B60H 1/00

(54) **VERFAHREN ZUM ZURÜCKSETZEN EINES GERÄTS SOWIE GERÄT UND STEUEREINHEIT**
METHOD FOR RESETTING A DEVICE, AND DEVICE AND CONTROL UNIT
PROCÉDÉ DE RÉINITIALISATION D'UN APPAREIL AINSI QU'APPAREIL ET UNITÉ DE COMMANDE

(30) Priorität: 02.05.2018 DE 102018003525
(43) Veröffentlichungstag der Anmeldung: 10.03.2021
(73) Patentinhaber: Truma Gerätetechnik GmbH & Co. KG, 85640 Putzbrunn (DE)
(72) Erfinder: DÖMÖTÖR, Mihai-Robert, 85640 Putzbrunn (DE); PRESS, Franz, 85640 Putzbrunn (DE); HÖFLINGER, Ulrich, 85640 Putzbrunn (DE)
(74) Vertreter: Prinz & Partner mbB
(86) Internationale Anmeldenummer: PCT/EP2019/058928
(87) Internationale Veröffentlichungsnummer: WO 2019/211066

(56) Entgegenhaltungen:
- EP-A1- 3 211 496
- US-A1- 2004 117 077
- US-A1- 2010 106 324
- US-B1- 7 092 794
- US-B2- 7 330 768

## Beschreibung

Die vorliegende Erfindung betrifft ein Verfahren zum Zurücksetzen eines Geräts. Weiterhin bezieht sich die Erfindung auf ein entsprechendes Gerät sowie ein System mit einem solchen Gerät und einer Steuereinheit.

Im Rahmen der fortschreitenden Digitalisierung lassen sich in Fabrikanlagen, in Häusern oder z. B. auch in Wohnwägen unterschiedliche Geräte durch eine zentrale Einheit steuern. Hierfür sind kabellose oder kabelgebundene Kommunikationsstandards bekannt, die unidirektional oder bidirektional ausgestaltet sein können.

Werden an die Geräte Steuerbefehle übermittelt, so ist es beispielsweise bekannt, dass zunächst eine Authentifizierung stattfindet. Dies ist vor allem dann relevant, wenn das entsprechende Netzwerk größer ist oder sich über einen größeren Bereich erstreckt. So beschreibt beispielsweise die WO 2014/047384 A2 eine Kommunikation zwischen einer zentralen Einheit und sogenannten "Smart Home Devices". Die Geräte verfügen dabei über Sicherheitsmodule, die die Identität der zentralen Einheit für einen Zugriff auf das Gerät überprüfen. Verfahren zur Überprüfung der Identität von Feldgeräten oder Messgeräten innerhalb von Netzwerken sind beispielsweise beschrieben in der DE 10 2014 112 611 A1 oder der DE 10 2012 217 743 A1.

Tritt bei einem modernen Gerät ein Fehler oder ein außergewöhnlicher Zustand auf, so meldet das Gerät den Fehler an die Steuereinheit. Ist der Fehler behoben oder wird der angezeigte Zustand z. B. durch einen Benutzer als tolerabel beurteilt, so ist es bei manchen Geräten erforderlich, dass der Fehler quittiert und dabei das Gerät wieder in einen fehlerfreien Zustand zurückgesetzt wird. Das Zurücksetzen kann auch darin bestehen, dass ein Fehlerspeicher entleert wird. Ein Verfahren zum Zurücksetzen eines Messgerätes, das mit einem Computer verbunden ist, offenbart beispielweise die US 2017/0205790 A1.

Ferner ist aus der US 7 330 768 B2 eine Prozessanlage mit einem Sicherheitssystem bekannt, das physikalisch und logisch auf eine Weise in ein Prozesssteuerungssystem eingegliedert ist, die es ermöglicht, dass das Sicherheitssystem und das Prozesssteuerungssystem eine gemeinsame Hard- und Software für Kommunikation, Konfiguration, Diagnose und Anzeige innerhalb der Prozessanlage verwenden können, während sie gleichzeitig immer noch eine funktionale Entkopplung zwischen den Sicherheitssystemsteuerungen und den Prozesssteuerungssystemsteuerungen vorsieht. Hierbei sind separate Sicherheitssystemsteuerungen über eine Sicherheitskommunikationsinfrastruktur an Sicherheitsfeldgeräte angeschlossen, während Prozesssteuerungssystemsteuerungen über standardmäßige Steuerungssystembusse oder Kommunikationsleitungen an die Steuerungssystemfeldgeräte angeschlossen sind. Ferner sind die Sicherheitssystemsteuerungen kommunikativ mit den Prozesssteuerungssystemsteuerungen über einen Bus oder einen anderen Kommunikationskanal verbunden und jeweils mit einem oder mehreren Bedienerarbeitsplatzrechnern innerhalb der Prozessanlage über ein gemeinsames Kommunikationsnetz verbunden, wodurch es möglich ist, dass die Software in den Bedienerarbeitsplatzrechnern sowohl mit den Prozesssteuerungssteuerungen (und damit zusammenhängenden Prozesssteuerungsfeldgeräten) als auch den Sicherheitssystemsteuerungen (und damit zusammenhängenden Sicherheitsfeld-geräten) kommunizieren und diese konfigurieren und deren Betrieb bildlich darstellen kann.

Handelt es sich bei dem Gerät beispielsweise um eine Heizung für einen Wohnwagen, so ist es meist im Stand der Technik üblich, dass das Gerät unmittelbar durch einen direkten Kontakt mit dem Gerät zurückgesetzt werden muss. Bei verbauten Geräten kann dies für den Benutzer durchaus umständlich sein.

Die Aufgabe der Erfindung besteht daher darin, das Zurücksetzen eines Geräts zu vereinfachen.

Die Aufgabe wird durch ein Verfahren gemäß Anspruch 1 gelöst. Ferner wird die Aufgabe durch ein Gerät gemäß Anspruch 8 sowie ein System gemäß Anspruch 9 gelöst.

Ein Vorteil der Erfindung besteht darin, dass sicher verhindert wird, dass durch eine nicht zugelassene Einheit ein Gerät z. B. nach dem Auftreten eines Fehlers zurückgesetzt wird. Es handelt sich in einer Ausgestaltung insbesondere um ein digitales Rücksetzen eines - in einer Ausgestaltung beispielsweise sicherheitskritischen - Fehlers in einem vernetzen System.

Insbesondere wird die Aufgabe gelöst durch ein Verfahren zum Zurücksetzen eines Geräts, wobei von dem Gerät ein Fehlersignal an eine Steuereinheit übermittelt wird, wobei das Fehlersignal von der Steuereinheit empfangen wird, wobei von der Steuereinheit ein Quittierungssignal ausgegeben wird, wobei das Quittierungssignal von dem Gerät empfangen wird, wobei von dem Gerät in Reaktion auf das empfangene Quittierungssignal ein Anfragesignal ausgegeben wird, wobei das Anfragesignal von der Steuereinheit empfangen wird, wobei nach einem Empfangen des Anfragesignals von der Steuereinheit basierend auf dem empfangenen Anfragesignal und basierend auf einem in der Steuereinheit hinterlegten Passwort ein Antwortsignal erzeugt und ausgegeben wird, wobei das Antwortsignal von dem Gerät empfangen wird, wobei von dem Gerät basierend auf dem empfangenen Antwortsignal, basierend auf einer Information des Anfragesignals und basierend auf einem in dem Gerät hinterlegten Passwort ein Vergleichsergebnis erzeugt wird, und wobei basierend auf dem Vergleichsergebnis ein Rücksetzmechanismus im Gerät ausgelöst wird.

Gemäß der Erfindung finden beim Zurücksetzen des Geräts zumindest folgende Schritte statt:
Das Gerät übermittelt ein Fehlersignal an eine Steuereinheit. Es liegt somit ein Fehlerzustand oder allgemein ein Ausnahmezustand im Gerät vor, der vom Gerät über das Fehlersignal an eine Steuereinheit signalisiert wird. Die Steuereinheit ist die Komponente, von der das Gerät Signale erhält und an die das Gerät Signale versendet. Das Gerät empfängt ein Quittierungssignal. Ob das Gerät diesem Quittierungssignal mit einem Rücksetzmechanismus folgt, hängt dabei von den nächsten Schritten ab. Als Antwort auf das empfangene Quittierungssignal gibt das Gerät ein Anfragesignal aus. Auf das Anfragesignal wiederum erwartet das Gerät ein passendes Antwortsignal. Erhält das Gerät ein Antwortsignal, so erzeugt das Gerät aus dem empfangenen Antwortsignal, aus einer Information, die in dem Anfragesignal steckt, und aus einem Passwort, das in dem Gerät hinterlegt und somit dem Gerät bekannt ist, ein Vergleichsergebnis. Das Gerät wertet quasi das vom Gerät empfangene Antwortsignal dahingehend aus, ob es dem Antwortsignal entspricht, das das Gerät erwartet hatte und das daher das passende Antwortsignal auf das Anfragesignal wäre. Abhängig von dem Vergleichsergebnis führt das Gerät einen Rücksetzmechanismus aus oder nicht. Der Rücksetzmechanismus besteht z. B. in einem Leeren eines Fehlerspeichers oder im Ausführen einer Funktion des Geräts oder z. B. in einem Starten des Geräts. Das angesprochene Antwortsignal wird basierend auf dem Anfragesignal und einem Passwort erzeugt. Das als Antwort auf das Anfragesignal erzeugte Antwortsignal hängt daher vom sicheren Empfang des Anfragesignals und von dem Passwort ab.

In einer Ausgestaltung ist vorgesehen, dass das erfindungsgemäße Verfahren mit dem Austausch der Signale zwischen Gerät und Steuereinheit bei jedem Auftreten eines Fehlers stattfindet.

Ein Vorteil der Erfindung ist insbesondere dann gegeben, wenn mit einer die Quittierungssignal ausgebenden Steuereinheit mehrere Geräte (z. B. Endgeräte) verbunden sind. Die Geräte können dann durch das erfindungsgemäße Verfahren gleichsam rückfragen, ob sie jeweils angesprochen worden sind.

Erfindungsgemäß wird somit verhindert, dass eine automatische und/oder unbeabsichtigte Fehlerrücksetzung stattfindet, da die Rücksetzung nur nach einer erfolgreichen Authentifizierung ausgeführt wird.

Überdies erlaubt das Verfahren eine Rücksetzung ohne den direkten Kontakt mit dem Gerät.

Schließlich erlaubt die Erfindung den Schutz vor der Anwendung von nicht zugelassenen oder z. B. gefälschten Geräten und/oder Steuereinheiten.

Gemäß einer Ausgestaltung des Verfahrens werden während einer Koordinierungsphase das in der Steuereinheit hinterlegte Passwort und das in dem Gerät hinterlegte Passwort miteinander abgeglichen. Über diese Ausgestaltung soll sichergestellt werden, dass das Gerät und die zugeordnete Steuereinheit das gleiche Passwort für die Sicherung des Zurückstellens verwenden. Die Koordinierungsphase ist dabei beispielsweise ein Teil der Fertigung oder wird initial nach einem ersten Verbinden von Gerät und Steuereinheit ausgelöst.

Gemäß einer Ausgestaltung des Verfahrens wird das Vergleichsergebnis derartig erzeugt, dass das Vergleichsergebnis darüber Auskunft gibt, ob das für die Erzeugung des Antwortsignals verwendete Passwort und das in dem Gerät hinterlegte Passwort identisch sind. Die Auswertung des Antwortsignals läuft somit in dieser Ausgestaltung auf die Frage hinaus, ob die jeweils verwendeten Passworte identisch sind.

Eine Ausgestaltung des Verfahrens besteht darin, dass das Anfragesignal derartig erzeugt wird, dass das Anfragesignal eine von dem Gerät erzeugte Zufallszeichenkette als Information beinhaltet. In dieser Ausgestaltung weist das Anfragesignal jeweils eine andere Information in Form der Zufallszeichenkette auf. Die Zeichenkette hat eine beliebige Länge und kann z. B. nur in einem Wert oder einer Zahl bestehen. In einer Ausgestaltung ist die Zufallszeichenkette ein Zahlenwert innerhalb eines vorgegebenen Intervalls.

Gemäß einer Ausgestaltung des Verfahrens wird das Antwortsignal von einer Steuereinheit erzeugt, indem eine Information des empfangenen Anfragesignals und das in der Steuereinheit hinterlegte Passwort durch eine in der Steuereinheit hinterlegte Verknüpfungsanweisung miteinander verknüpft werden, und werden beim Erzeugen des Vergleichsergebnisses die Information des Anfragesignals und das in dem Gerät hinterlegte Passwort durch eine in dem Gerät hinterlegte Verknüpfungsanweisung miteinander verknüpft. In dieser Ausgestaltung ist vorgesehen, dass für die Erzeugung des Antwortsignals eine bestimmte Verknüpfungsanweisung verwendet wird und dass bei der Erzeugung des Vergleichsergebnisses ebenfalls eine Verknüpfungsanweisung verwendet wird, die somit die Verknüpfungsanweisung ist, die erwartet wird. Die Verknüpfungsanweisung ist z. B. das Bilden einer mathematischen Funktion (z. B. einer Hashfunktion) aus einer Information des Anfragesignals und dem Passwort. In einer Ausgestaltung werden z. B. die Information und das Passwort durch eine Und-Funktion oder eine Oder-Funktion miteinander verknüpft. Die Verknüpfungsanweisung gibt somit vor, wie die Information und das Passwort zu verarbeiten sind, um zu dem Antwortsignal zu gelangen.

Eine Ausgestaltung des Verfahrens besteht darin, dass während einer Koordinierungsphase die in der Steuereinheit hinterlegte Verknüpfungsanweisung und die in dem Gerät hinterlegte Verknüpfungsanweisung miteinander abgeglichen werden. In dieser Ausgestaltung ist vorgesehen, dass die Steuereinheit und das Gerät in einer Koordinierungsphase miteinander bekannt gemacht werden. Dies besteht z. B. infolge des Verbindens des Geräts mit der Steuereinheit oder geschieht bereits werkseitig bei der Fertigung des Geräts und/oder der Steuereinheit.

Eine Ausgestaltung des Verfahrens besteht darin, dass das Quittierungssignal infolge eines von einem Benutzer erzeugten Befehls ausgegeben wird. In dieser Ausgestaltung ist vorgesehen, dass ein Eingreifen eines Benutzers - z. B. über das Betätigen einer Taste an der Steuereinheit - erforderlich ist, um das Quittierungssignal auszulösen.

Gemäß einer Ausgestaltung des Verfahrens wird ein zeitlicher Abstand zwischen der Ausgabe des Anfragesignals und dem Empfang des Antwortsignals ermittelt, und wird das Vergleichsergebnis in Abhängigkeit von dem ermittelten zeitlichen Abstand erzeugt. In dieser Ausgestaltung wird überwacht, wie schnell das Antwortsignal nach dem Anfragesignal empfangen wird. In einer Ausgestaltung führt ein Überschreiten eines Grenzwerts für den zeitlichen Abstand dazu, dass der Rücksetzmechanismus nicht ausgelöst wird.

Eine Ausgestaltung des Verfahrens besteht darin, dass das Quittierungssignal jeweils nach dem Übermitteln eines Fehlersignals von dem Gerät zur Steuereinheit und nach einem Empfangen eines von einem Benutzer erzeugten Befehls an das Gerät übermittelt wird, und dass in dem Fall, dass eine Anzahl von Fehlersignalen innerhalb einer vorgegebenen Zeitspanne einen vorgegebenen Grenzwert übersteigt oder gleich einem vorgegebenen Grenzwert ist, eine ergänzende Benutzerhandlung eingefordert wird. In dieser Ausgestaltungen wird ermittelt, wie oft innerhalb einer gewissen Zeitspanne das Gerät zurückgesetzt wird. Übersteigt die Anzahl einen Grenzwert oder ist sie gleich einem solchen Grenzwert, so ist eine ergänzende Benutzerhandlung - also ergänzend zu der Eingabe des Befehls, der das Quittierungssignal auslöst - gefordert. Das zu häufige Quittieren kann dafür sprechen, dass das Gerät zu fehlerhaft ist, sodass das reine Quittieren und Zurücksetzen nicht ausreichend ist, oder dass immer der gleiche Fehler nur quittiert wird, aber weiterhin bestehen bleibt, sodass der Benutzer sich intensiver mit dem Gerät und dem Fehler auseinandersetzen sollte.

Gemäß einer Ausgestaltung des Verfahrens besteht die ergänzende Benutzerhandlung darin, dass der Benutzer eine Zeitdauer vor einer Ermöglichung des Empfangens eines weiteren Befehls abwartet und/oder dass der Benutzer unmittelbar auf das Gerät einwirkt. In einer Ausgestaltung wird der Benutzer somit dazu gezwungen, eine gewisse Zeit abzuwarten, bevor er erneut einen Befehl zum Zurücksetzen des Gerätes geben kann. In einer alternativen oder ergänzenden Ausgestaltung ist es erforderlich, dass der Benutzer direkt mit dem Gerät interagiert und es nicht nur aus der Ferne über die Steuereinheit bedient.

Insbesondere wird die Aufgabe gelöst durch ein Gerät mit einer Schnittstelle zum Senden und Empfangen von Signalen, wobei das Gerät über die Schnittstelle Fehlersignale ausgibt, wobei das Gerät in dem Fall, dass das Gerät über die Schnittstelle ein Quittierungssignal empfängt, ein Anfragesignal über die Schnittstelle ausgibt, ein Antwortsignal über die Schnittstelle empfängt, basierend auf dem empfangenen Antwortsignal, basierend auf einer Information des Anfragesignals und basierend auf einem in dem Gerät hinterlegten Passwort ein Vergleichsergebnis erzeugt und basierend auf dem Vergleichsergebnis einen Rücksetzmechanismus im Gerät auslöst.

Das Gerät ist derartig ausgestaltet, dass es nach dem Empfangen von einem Quittierungssignal durch ein Anfragesignal sicherstellt, ob das Gerät dem Quittierungssignal mit einem Rücksetzmechanismus folgen darf. Das Quittierungssignal ist dabei in einer Ausgestaltung dann erforderlich, wenn das Gerät durch ein Fehlersignal das Vorliegen eines Fehlers oder eines außergewöhnlichen Zustands angezeigt hat.

Das erfindungsgemäße Gerät ist in einer Ausgestaltung so ausgeführt, dass es mindestens eine der vorgenannten oder folgenden Ausgestaltungen des Verfahrens umsetzen oder mit der beschriebenen Steuereinheit zusammenarbeiten kann.

Das Gerät ist dazu ausgestaltet, eine Gasmischung und/oder eine Flüssigkeit zu erwärmen und/oder abzukühlen, sodass das Gerät vorzugsweise Funktionen einer Heizung und/oder eines Boilers und/oder einer Klimaanlage erfüllt. Das Gerät ist in einer Ausgestaltung Bestandteil eines Wohnwagens, eines Wohnmobils oder eines Schiffs.

Ferner kann eine Steuereinheit mit einer Schnittstelle zum Senden und Empfangen von Signalen und mit einer Eingabevorrichtung zum Empfangen eines von einem Benutzer erzeugten Befehls vorgesehen sein, wobei die Steuereinheit in dem Fall, dass die Steuereinheit über die Eingabevorrichtung einen Befehl des Benutzers empfängt, ein Quittierungssignal über die Schnittstelle ausgibt, und wobei die Steuereinheit in dem Fall, dass die Steuereinheit über die Schnittstelle ein Anfragesignal empfängt, basierend auf dem empfangenen Anfragesignal und basierend auf einem in der Steuereinheit hinterlegten Passwort ein Antwortsignal erzeugt und über die Schnittstelle ausgibt.

Die Steuereinheit ist derartig ausgestaltet, dass sie nach dem Senden eines Quittierungssignals an ein Gerät eine Authentifizierung vornehmen lässt, indem die Steuereinheit nach dem Empfangen eines Anfragesignals ein passendes Antwortsignal erzeugt. Das Antwortsignal ergibt sich dabei basierend auf einer Information des Anfragesignals und einem Passwort, das in der Steuereinheit hinterlegt ist. Somit gibt das Antwortsignal Auskunft darüber, ob das Anfragesignal richtig von der Steuereinheit empfangen worden ist und ob die Steuereinheit über das richtige Passwort verfügt.

Die Steuereinheit ist in einer Ausgestaltung so ausgeführt, dass sie mindestens eine der beschriebenen Ausgestaltungen des Verfahrens umsetzen oder mit dem beschriebenen Gerät zusammenarbeiten kann.

Die Steuereinheit gibt über die Schnittstelle Parameterwerte hinsichtlich eines Erwärmens und/oder eines Abkühlens einer Gasmischung und/oder einer Flüssigkeit aus. Die Steuereinheit ist dafür ausgestaltet, mindestens ein Gerät in einem Wohnwagen, einem Wohnmobil oder in einem Schiff in Bezug auf die Temperatur oder das Klima zu steuern.

Schließlich löst die Erfindung die Aufgabe durch ein System, das mindestens ein Gerät nach einem der obigen Ausgestaltungen und eine Steuereinheit gemäß einer der obigen Ausgestaltungen aufweist.

Das System ist in einer Ausgestaltung ein Bestandteil eines Wohnwagens, eines Wohnmobils, eines Fahrzeugs oder eines Schiffes.

Im Einzelnen gibt es eine Vielzahl von Möglichkeiten, das erfindungsgemäße Verfahren, das erfindungsgemäße Gerät und die erfindungsgemäße Steuereinheit auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
Fig. 1 eine schematische Darstellung eines Systems mit einem Gerät und einer Steuereinheit und
Fig. 2 a) bis d) eine schematische Darstellung eines beispielhaften Ablaufs eines Zurücksetzens des Geräts.

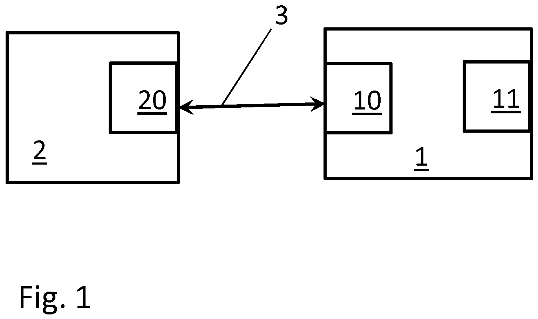

Die Fig. 1 zeigt ein System, das eine Steuereinheit 1 und ein Gerät 2 aufweist, die hier über eine bidirektionale Datenleitung 3 miteinander verbunden sind. Das System ist dabei beispielsweise ein Teil eines Wohnwagens, eines Wohnmobils oder eines Schiffes.

Das Gerät 2, bei dem es sich beispielsweise um eine Heizung und/oder einen Boiler zur Erhitzung von Wasser handelt, verfügt über eine Schnittstelle 20, mit der das Gerät 2 Signale empfängt und aussendet.

Die Steuereinheit 1 weist ebenfalls eine Schnittstelle 10 zum Senden und Empfangen von Signalen auf. Weiterhin ist eine Eingabevorrichtung 11 (z. B. ein Human-Machine-Interface) vorhanden, über welche ein Benutzer das Auftreten eines Fehlers im Gerät 2 quittieren und damit das Zurücksetzverfahren in Gang setzen kann.

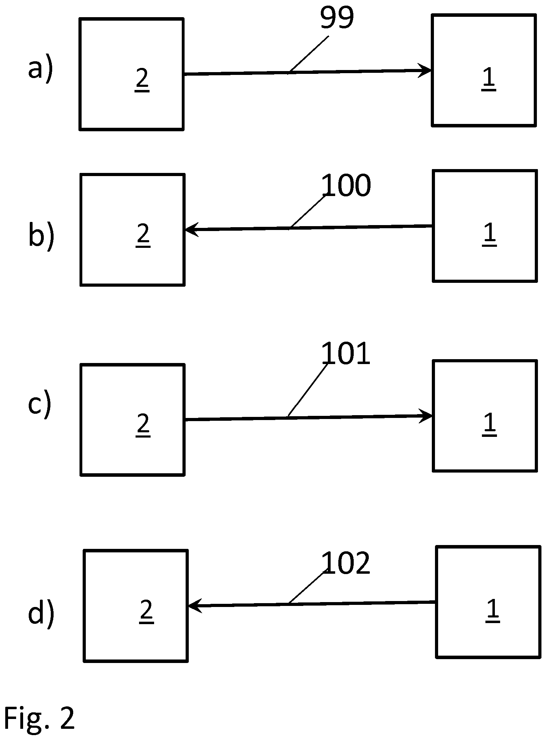

Der Ablauf des Zurücksetzens des Geräts 2 ist in der Fig. 2 angedeutet. Dabei sind Gerät 2 und Steuereinheit 1 vereinfacht dargestellt. Der zeitliche Ablauf ist von Fig. 2 a) bis Fig. 2 d).

In der Fig. 2 a) erkennt das Gerät 2, dass ein außergewöhnlicher Zustand vorliegt, sodass es erforderlich ist, ein Fehlersignal 99 auszugeben und beispielsweise eine Reaktion auszulösen, z. B. Stoppen eines Erhitzungsvorgangs.

Das Fehlersignal 99 gelangt zu der Steuereinheit 1 und wird dort beispielsweise optisch angezeigt. Gibt ein Benutzer an der Steuereinheit 1 einen entsprechenden Befehl ein, so gibt die Steuereinheit 1 ein Quittierungssignal 100 an das Gerät 2 aus (siehe Fig. 2 b)).

Infolge des Empfangs dieses Quittierungssignals 100 überprüft das Gerät 2, ob es einen Zurücksetzmechanismus starten soll, indem das Gerät 2 ein Anfragesignal 101 an die Steuereinheit 1 sendet (siehe Fig. 2 c)).

In Reaktion auf das Anfragesignal 101 erzeugt die Steuereinheit 1 ein Antwortsignal 102, das eine Information des Anfragesignals 101 und ein Passwort trägt. Wie in der Fig. 2 d) dargestellt, sendet die Steuereinheit 1 das Antwortsignal 102 an das Gerät 2.

Das Gerät 2 wertet das Antwortsignal 102 aus und löst in Abhängigkeit von einem Vergleichsergebnis einen Rücksetzmechanismus aus.

Das Gerät 2 erzeugt das Vergleichsergebnis in Abhängigkeit von der Information, die das von dem Gerät 2 gesendete Anfragesignal 101 beinhaltet, in Abhängigkeit von dem Passwort, das in dem Gerät 2 hinterlegt ist, und in Abhängigkeit von dem Antwortsignal 102. Ein positives Vergleichsergebnis bedeutet, dass das Gerät 2 und die Steuereinheit 1 jeweils das gleiche Passwort verwendet haben, dass das Anfragesignal 101 sicher von der Steuereinheit 1 empfangen worden ist und dass das Gerät 2 und die Steuereinheit 1 auf die gleiche Verknüpfungsanweisung zugreifen. Generell wird durch das Vergleichsergebnis abgefragt, ob die Steuereinheit 1 wirklich berechtigt ist, das Gerät 2 zurückzusetzen. Das Zurücksetzen bewirkt dabei, dass das Gerät weiterhin normal funktioniert.

### Bezugszeichenliste

- **1**: Steuereinheit
- **2**: Gerät
- **3**: Datenleitung
- **10**: Schnittstelle der Steuereinheit
- **11**: Eingabevorrichtung der Steuereinheit
- **20**: Schnittstelle des Geräts
- **99**: Fehlersignal
- **100**: Quittierungssignal
- **101**: Anfragesignal
- **102**: Antwortsignal

## Patentansprüche

1. Verfahren zum Zurücksetzen eines Geräts (2) mit den Schritten:
a) von dem Gerät (2) ein Fehlersignal (99) an eine Steuereinheit (1) übermittelt wird,
b) das Fehlersignal (99) von der Steuereinheit (1) empfangen wird,
c) von der Steuereinheit (1) ein Quittierungssignal (100) ausgegeben wird,
d) das Quittierungssignal (100) von dem Gerät (2) empfangen wird,
**dadurch gekennzeichnet, dass** das Verfahren ferner die Schritte umfasst:
e) von dem Gerät (2) in Reaktion auf das empfangene Quittierungssignal (100) ein Anfragesignal (101) ausgegeben wird,
f) das Anfragesignal (101) von der Steuereinheit (1) empfangen wird,
g) von der Steuereinheit (1) basierend auf dem empfangenen Anfragesignal (101) und basierend auf einem in der Steuereinheit (1) hinterlegten Passwort ein Antwortsignal (102) erzeugt und ausgegeben wird,
h) das Antwortsignal (102) von dem Gerät (2) empfangen wird,
i) von dem Gerät (2) basierend auf dem empfangenen Antwortsignal (102), basierend auf einer Information des Anfragesignals (101) und basierend auf einem in dem Gerät (2) hinterlegten Passwort ein Vergleichsergebnis erzeugt wird, und
j) basierend auf dem Vergleichsergebnis ein Rücksetzmechanismus im Gerät (2) ausgelöst wird.

2. Verfahren nach Anspruch 1,
wobei das Vergleichsergebnis derartig erzeugt wird, dass das Vergleichsergebnis darüber Auskunft gibt, ob das für die Erzeugung des Antwortsignals (102) verwendete Passwort und das in dem Gerät (2) hinterlegte Passwort identisch sind.

3. Verfahren nach Anspruch 1 oder 2,
wobei das Anfragesignal (101) derartig erzeugt wird, dass das Anfragesignal (101) eine von dem Gerät (2) erzeugte Zufallszeichenkette als Information beinhaltet.

4. Verfahren nach einem der Ansprüche 1 bis 3,
wobei das Antwortsignal (102) erzeugt wird, indem eine Information des empfangenen Anfragesignals (101) und das in der Steuereinheit (1) hinterlegte Passwort durch eine in der Steuereinheit (1) hinterlegte Verknüpfungsanweisung miteinander verknüpft werden, und
wobei beim Erzeugen des Vergleichsergebnisses die Information des Anfragesignals (101) und das in dem Gerät (2) hinterlegte Passwort durch eine in dem Gerät (2) hinterlegte Verknüpfungsanweisung miteinander verknüpft werden.

5. Verfahren nach einem der Ansprüche 1 bis 4,
wobei das Quittierungssignal (100) infolge eines von einem Benutzer erzeugten Befehls ausgegeben wird.

6. Verfahren nach Anspruch 5,
wobei das Quittierungssignal (100) jeweils nach dem Übermitteln eines Fehlersignals (99) von dem Gerät (2) zur Steuereinheit (1) und nach einem Empfangen eines von einem Benutzer erzeugten Befehls an das Gerät (2) übermittelt wird, und
wobei in dem Fall, dass eine Anzahl von Fehlersignalen (99) innerhalb einer vorgegebenen Zeitspanne einen vorgegebenen Grenzwert übersteigt oder gleich einem vorgegebenen Grenzwert ist, eine ergänzende Benutzerhandlung eingefordert wird.

7. Verfahren nach Anspruch 6,
wobei die ergänzende Benutzerhandlung darin besteht, dass der Benutzer eine Zeitdauer vor einer Ermöglichung des Empfangens eines weiteren Befehls abwartet und/oder dass der Benutzer unmittelbar auf das Gerät (2) einwirkt.

8. Gerät (2) mit einer Schnittstelle (20) zum Senden und Empfangen von Signalen,
wobei das Gerät (2) dazu ausgestaltet ist, die Schritte a), d), e) sowie h) bis j) des Verfahrens gemäß Anspruch 1 durchzuführen, und
wobei das Gerät (2) dazu ausgestaltet ist, eine Gasmischung und/oder eine Flüssigkeit zu erwärmen und/oder abzukühlen, sodass das Gerät (2) Funktionen einer Heizung und/oder eines Boilers und/oder einer Klimaanlage erfüllt.

9. System, das eine Steuereinheit (1) und ein Gerät (2) mit jeweils einer Schnittstelle (10, 20) zum Senden und Empfangen von Signalen aufweist,
wobei die Steuereinheit (1) eine Eingabevorrichtung (11) zum Empfangen eines von einem Benutzer erzeugten Befehls hat,
wobei die Steuereinheit (1) dazu ausgestaltet ist, die Schritte b), c), f) und g) des Verfahrens gemäß Anspruch 1 durchzuführen,
wobei die Steuereinheit (1) dazu ausgestaltet ist, das Gerät (2) in einem Wohnwagen, einem Wohnmobil oder einem Schiff in Bezug auf eine Temperatur und/oder ein Klima zu steuern, indem die Steuereinheit (1) über die Schnittstelle (10) Parameterwerte hinsichtlich eines Erwärmens und/oder eines Abkühlens einer Gasmischung und/oder einer Flüssigkeit ausgibt,
wobei das Gerät (2) dazu ausgestaltet ist, die Schritte a), d), e) sowie h) bis j) des Verfahrens gemäß Anspruch 1 durchzuführen, und
wobei das Gerät (2) dazu ausgestaltet ist, eine Gasmischung und/oder eine Flüssigkeit zu erwärmen und/oder abzukühlen, sodass das Gerät (2) Funktionen einer Heizung und/oder eines Boilers und/oder einer Klimaanlage erfüllt.

## Claims

1. A method of resetting a device (2), comprising the steps of:
(a) transmitting, by the device (2), an error signal (99) to a control unit (1);
(b) receiving, by the control unit (1), the error signal (99);
(c) outputting, by the control unit (1), an acknowledgment signal (100);
(d) receiving, by the device (2), the acknowledgment signal (100);
**characterized in that** the method further comprises the steps of:
(e) outputting, by the device (2), an inquiry signal (101) in response to the acknowledgment signal (100) received;
(f) receiving, by the control unit (1), the inquiry signal (101);
(g) generating and outputting, by the control unit (1), a reply signal (102) based on the inquiry signal (101) received and based on a password stored in the control unit (1);
(h) receiving, by the device (2), the reply signal (102);
(i) generating, by the device (2), a comparison result based on the reply signal (102) received, based on an information of the inquiry signal (101), and based on a password stored in the device (2); and
(j) activating a reset mechanism in the device (2) based on the comparison result.

2. The method according to claim 1,
wherein the comparison result is generated such that the comparison result provides information as to whether the password used for generating the reply signal (102) and the password stored in the device (2) are identical.

3. The method according to claim 1 or 2,
wherein the inquiry signal (101) is generated such that the inquiry signal (101) contains as an information a random character string generated by the device (2).

4. The method according to any of claims 1 to 3,
wherein the reply signal (102) is generated in that an information of the inquiry signal (101) received and the password stored in the control unit (1) are linked to each other by a logic instruction stored in the control unit (1); and
wherein, when the comparison result is generated, the information of the inquiry signal (101) and the password stored in the device (2) are linked to each other by a logic instruction stored in the device (2).

5. The method according to any of claims 1 to 4,
wherein the acknowledgment signal (100) is output as a result of a command generated by a user.

6. The method according to claim 5,
wherein the acknowledgment signal (100) is transmitted to the device (2) each time after an error signal (99) is transmitted by the device (2) to the control unit (1) and after a command generated by a user is received; and
wherein a supplementary user action is demanded in the event that, within a predefined period of time, a number of error signals (99) exceeds a predefined limit value or is equal to a predefined limit value.

7. The method according to claim 6,
wherein the supplementary user action consists in that the user waits a time period before enabling the reception of a further command and/or in that the user acts directly on the device (2).

8. A device (2) comprising an interface (20) for sending and receiving signals,
wherein the device (2) is configured to carry out steps (a), (d), (e) as well as (h) to (j) of the method according to claim 1; and
wherein the device (2) is configured to heat and/or cool a gas mixture and/or a liquid so that the device (2) fulfils functions of a heater and/or a boiler and/or an air conditioning system.

9. A system including a control unit (1) and a device (2) which each comprise an interface (10, 20) for sending and receiving signals,
wherein the control unit (1) has an input device (11) for receiving a command generated by a user;
wherein the control unit (1) is configured to carry out steps (b), (c), (f) and (g) of the method according to claim 1;
wherein the control unit (1) is configured to control the device (2) in a travel trailer, a motorhome or a ship with respect to a temperature and/or a climate in that the control unit (1) outputs parameter values via the interface (10) in regard to a heating and/or a cooling of a gas mixture and/or a liquid;
wherein the device (2) is configured to carry out steps (a), (d), (e) as well as (h) to (j) of the method according to claim 1; and
wherein the device (2) is configured to heat and/or cool a gas mixture and/or a liquid so that the device (2) fulfils functions of a heater and/or a boiler and/or an air conditioning system.

## Revendications

1. Procédé de réinitialisation d'un appareil (2), comprenant les étapes suivantes :
a) un signal d'erreur (99) est transmis par l'appareil (2) à une unité de commande (1),
b) le signal d'erreur (99) est reçu par l'unité de commande (1),
c) un signal d'acquittement (100) est émis par l'unité de commande (1),
d) le signal d'acquittement (100) est reçu par l'appareil (2),
**caractérisé en ce que** le procédé comprend en outre les étapes suivantes :
e) un signal d'interrogation (101) est émis par l'appareil (2) en réponse au signal d'acquittement (100) reçu,
f) le signal d'interrogation (101) est reçu par l'unité de commande (1),
g) un signal de réponse (102) est généré et émis par l'unité de commande (1) sur la base du signal d'interrogation (101) reçu et sur la base d'un mot de passe enregistré dans l'unité de commande (1),
h) le signal de réponse (102) est reçu par l'appareil (2),
i) un résultat de comparaison est généré par l'appareil (2) sur la base du signal de réponse (102) reçu, sur la base d'une information du signal d'interrogation (101), et sur la base d'un mot de passe enregistré dans l'appareil (2), et
j) un mécanisme de réinitialisation est déclenché dans l'appareil (2) sur la base du résultat de comparaison.

2. Procédé selon la revendication 1,
le résultat de comparaison étant généré de telle sorte que le résultat de comparaison fournit des informations si le mot de passe utilisé pour générer le signal de réponse (102) et le mot de passe enregistré dans l'appareil (2) sont identiques.

3. Procédé selon la revendication 1 ou 2,
le signal d'interrogation (101) étant généré de telle sorte que le signal d'interrogation (101) contient, en tant qu'information, une chaîne de caractères aléatoire générée par l'appareil (2).

4. Procédé selon l'une des revendications 1 à 3,
le signal de réponse (102) étant généré en associant une information du signal de d'interrogation (101) reçu et le mot de passe enregistré dans l'unité de commande (1) par une instruction logique enregistrée dans l'unité de commande (1), et
l'information du signal d'interrogation (101) et le mot de passe enregistré dans l'appareil (2) étant associés l'une à l'autre par une instruction logique enregistrée dans l'appareil (2) lors de la génération du résultat de comparaison.

5. Procédé selon l'une des revendications 1 à 4,
le signal d'acquittement (100) étant émis suite à une commande générée par un utilisateur.

6. Procédé selon la revendication 5,
le signal d'acquittement (100) étant respectivement transmis à l'appareil (2) après la transmission d'un signal d'erreur (99) de l'appareil (2) à l'unité de commande (1) et après une réception d'une commande générée par un utilisateur, et
une action complémentaire de l'utilisateur étant requise au cas où un nombre de signaux d'erreur (99) dépasse une valeur seuil prédéterminée ou est égal à une valeur seuil prédéterminée en l'espace d'une période prédéterminée.

7. Procédé selon la revendication 6,
l'action complémentaire de l'utilisateur consistant en ce que l'utilisateur attend pendant un période de temps avant de permettre la réception d'une autre commande et/ou en ce que l'utilisateur agit directement sur l'appareil (2).

8. Appareil (2) comprenant une interface (20) pour l'émission et la réception de signaux,
l'appareil (2) étant réalisé de manière à effectuer les étapes a), d), e) et h) à j) du procédé selon la revendication 1, et
l'appareil (2) étant réalisé de manière à chauffer et/ou à refroidir un mélange gazeux et/ou un liquide de sorte que l'appareil (2) remplit des fonctions d'un dispositif de chauffage et/ou d'une chaudière et/ou d'une installation de climatisation.

9. Système comprenant une unité de commande (1) et un appareil (2) présentant respectivement une interface (10, 20) pour l'émission et la réception de signaux,
l'unité de commande (1) présentant un dispositif d'entrée (11) pour la réception d'une commande générée par un utilisateur,
l'unité de commande (1) étant réalisée de manière à effectuer les étapes b), c), f) et g) du procédé selon la revendication 1,
l'unité de commande (1) étant réalisée de manière à commander l'appareil (2) dans une caravane, un camping-car ou un bateau en ce qui concerne une température et/ou un climat, en ce que l'unité de commande (1) émet, par l'intermédiaire de l'interface (10), des valeurs paramétriques concernant un réchauffement et/ou un refroidissement d'un mélange gazeux et/ou d'un liquide,
l'appareil (2) étant réalisé de manière à effectuer les étapes a), d), e) et h) à j) du procédé selon la revendication 1, et
l'appareil (2) étant réalisé de manière à réchauffer et/ou à refroidir un mélange gazeux et/ou un liquide de sorte que l'appareil (2) remplit des fonctions d'un dispositif de chauffage et/ou d'une chaudière et/ou d'une installation de climatisation.
